# EUROPEAN PATENT APPLICATION

(11) **EP 1 386 546 A1**
(43) Date of publication of application: **04.02.2004**
(21) Application number: 02425504.4
(22) Date of filing: 31.07.2002
(51) Int. Cl.: A23L 1/305, A23L 1/0528, A23L 1/0522

(54) **Association of prebiotics and colonic foods intended to help and keep the physiological health and the functional capacity of the intestine**

(71) Applicant: Ca.Di.Group S.r.l., 00124 Roma (IT)
(72) Inventor: Caramelli, Gianfranco, 00124 Rome (IT)
(74) Representative: Mariani, Giulio

(57) **Abstract**

An association of prebiotics and colonic food intended to help and keep the physiological health and the functional capacity of the intestine consisting of a combustion of inulin, a resistant starch, and glutamine in proportions by weight varying within determined ranges.

## Description

As known, the intestine consists essentially of two portions: small intestine (or jejunum or duodenum) and large intestine. Both such intestine tracts are populated with several species of microrganisms forming a complex ecological system consisting of more than 400 species of bacteria.

The number of these species increases gradually from jejunum to colon passing from about 10⁴ in the jejunum to about 10¹² microrganisms per gram. Such bacteria are divided into two categories: gram-positive (or fermentative) and gram-negative (or putrefactive) bacteria, the intestine having a good physiological functionality only when there is a good balance between such classes of bacteria.

The main factors influencing both the qualitative and quantitative microbial population of the ecological system in the intestine are environment, diet, gastric acidity, and intestine motility. For example, baby nourishing is an important factor influencing the colonization of the intestine by microrganisms; in fact, breast feeding or bottle-feeding leads to a prevalence of bifid bacteria and lactobacilli and/or enterobacteriacea or bacterioids, respectively. The immunoactive fractions of colostrum can both influence the composition of the bacterial flora and protect it from infections.

Furthermore, the multiple, complex interactions that the different bacterial strains develop among one another should not be forgotten. Such interactions include competition mechanisms for several nourishing substrates, variation in the endominal pH and the oxidoreduction potential, conveyance of the resistance to antibiotics, synthesis of substances with bactericidal action (bacteriocins) and growth factors.

Actually, the large bacterial population in the intestine can be considered as a real "organ", one of the most versatile, active organ of the organism, as the presence of enteral microflora is indispensable to perform many enteral functions such as the correct morphological, functional maturation of the digestive tract, both qualitative and quantitative controls of gases, metabolism of bile acid as well as steroid hormones, proteins and nitrogenous products, sugars, and lipids, the use of exogenous vitamins and those synthesised all over again (vit. K, folic acid, vit. B...) and metabolism of several drugs.

It is very important to consider that bacteria (mostly colon bacteria) ferment sugars not absorbed by the small intestine and transform them into short-chain fat acids (SCFA) that not only are the most important energy substrates for the colic mucosa but also exert a trophic action to the enteral mucosa by inducing cellular differentiation and regulating the expressivity.

It has been proved that the bacteria of the enteral flora, in addition to a number of protective functions, play an all-important role in the pathogenesis of some disease. The products of the metabolism of the enteral bacteria also have a potential pro-inflammatory effect. Only the perfect balance between pro-inflammatory and protective factors can provide the beneficial effect of the enteral flora.

From the foregoing it should be appreciated the importance of creating a correct relation among several bacterial strains in the intestine. In order to achieve such object two ways may be followed:
1) Introducing into the organism living microrganisms which are beneficial to the intestine.
2) Introducing foods that are not digested so that they reach the intestine unchanged, are subjected there to fermentation with formation of SCFA, and selectively stimulate growth and activity of beneficial bacteria in the colon.

The first way relates to the use of the so-called lactic ferments which are referred to as "probiotics" today. The second way relates to the use of the so-called fibres or colonic foods and particular, more selective foods or prebiotics as well.

Lactic ferments are presently used and have been in the past very diffusely as additional therapy in several treatments. Because of the great amount of bacteria in the intestine, in order to achieve a good balance in the enteral microflora it is obviously necessary that a large number of living bacteria can reach the intestine and form colonies by adhering to the walls thereof.

It is very hard to achieve the conditions mentioned above as microrganisms, especially lactic ferments, in order to keep alive needs temperatures between 2 and 8°C as well as to withstand both hydrochloric acid in the stomach and biliary juice, and to show good capability to adhere to the intestine walls otherwise they would be soon carried away by faeces.

Presently, a few microrganisms can meet, even if partially, all of the above-mentioned conditions.

Furthermore, only one bacterial family and not the whole bacterial strain (e.g. *Lactobacillus plantarum* which is one of the many Lactobacilli) is put into the intestine by such way.

Colonic foods and prebiotics are two classes of products the activity of which has been recently ascertained. Colonic foods are products not absorbed by the intestine or hydrolized by enzymes. They enter the colon to be used as substrates for the endogenous colon bacteria, thus supplying the host with energy, metabolic substrates and micronutrients.

Among the "colonic foods", the indigestible carbohydrates (oligo- and polysaccharides) are products that fully meet the criteria to which a "prebiotic" should be responsive, and namely:
1) Not being hydrolized or absorbed by the upper portion of the gastrointestinal tract.
2) Forming a selective substrate for one or a limited number of beneficial colon bacteria which are stimulated to grow or to be activated metabolically.
3) Accordingly, prebiotics should be able to modify the colic flora to a beneficial composition.
4) Inducing luminal or systemic effects which are beneficial to the health of the host.

Therefore, the use of such prebiotics has some advantages over the use of probiotics, the most important of which are as follows:
1) Prebiotics are not damaged by either the storage temperature or the gastric or biliary juices.
2) Prebiotics cause bacteria to proliferate in situ while the bacteria of probiotics should arrive there still living and adhere to the intestine walls.
3) Prebiotics develop always the same amount and proportion of SCFA, while the production of SCFA by the probiotics is bound to the substrate found.
4) Prebiotics stimulate all families of the proliferating strain, while probiotics introduce only one or some.

With reference to the foregoing, the Applicant has conceived, made and experimented an association of prebiotics and colonic foods consisting of inulin, resistant starch, and glutamine intended to help and keep the physiological health and the functional capacity of the intestine.

Regarding the nature and the features it should be pointed out as follows:

### INULIN

Inulin is a polysaccharide. As known, the most of polysaccharides are hydrolized in the upper gastrointestinal tract and the resulting monosaccharides arrive to liver through the vena portae and then to systemic circulation. They are carbohydrates which are essential to keep a good health and serve both as substrate and regulator of the major metabolic processes. Moreover, they cause hormone secretions, however, because of both the bonding between molecules and other not yet explained features some of these polysaccharides have different digestion resistance degrees and reach blind gut and colon under the state at which they have been taken and do not supply monosaccharides to the organism.

The indigestibility of these carbohydrates leads in most cases to their classification as dietetic fibres that are metabolized from one or more types of anaerobic bacteria upon reaching blind gut and colon. Such metabolic process, so-called fermentation, is not only useful to bacteria because of its supplying them with energy necessary for the proliferation but also produces gases (H₂, CO₂, CH₄) which are useless for the host as well as short-chain fat acids (SCFA) and lactic acid. SCFA are almost fully absorbed (90-95%) through the intestine wall of blind gut and ascending colon by a mechanism which is still being discussed.

Except for butyrate which is the major energy substrate for colonocytes, the other SCFA reach the circulation of vena portae and enter the liver which is the most important organ for their utilization.

However, a portion of acetate (20-50%) escapes the metabolization and reach the peripheral tissues, mainly muscular tissues, through the systemic circulation. Acetate, propionate, butyrate, and lactate are then important substrates and/or intermediate means for cell metabolism. In addition, it has been recently proved that at least some molecules can also serve as metabolic key process modulators.

Among indigestible polysaccharides the fibres are the most common compositions and often combine also uronic acids with monosaccharides.

An important class of indigestible polysaccharides is formed by some (up to 10) or many (50-60) omopolymers. Very important among these are inulin and its hydrolysis product, the oligofructose, which are ordinary natural fructose products.

It has been proved that 90-95% oligofructosaccharides are intact upon reaching blind gut-colon and then are fermented. The result of their fermentation is:
1) a decrease of pH in colon and then in the faeces due to the production of SCFA;
2) a significant modification of the colon microflora.

The existing documentation shows that such oligosaccharides in vitro serve as substrates for the growth and the proliferation of anaerobic bacteria. In case they are specific or preferential substrates for the proliferation of certain bacteria, a decrease of the bacteria will result. Wang and Gibson have shown, for example by oligofructose and inulin, a marked proliferation of bifid bacteria and the decrease of bacterioids, lactobacilli, clostridia, coliforms and other gram-positive cocci. Such specificity of oligofructose and inulin to bifid bacteria is mainly due to the secretion of a beta fructosidase by such bacteria.

The mechanism accepted to inhibit the growth of other bacteria involves a decrease of pH as a result of a great production of SCFA. However, this acidity is not the only inhibition mechanism of the growth of *E. Coli* and *Clostridium Perfrigens.* In fact some authors have proved that bifid bacteria are able to produce substances which would exhibit a bactericide action to several bacteria including those of the Clostridium species.

The fermentation capability and the bifidogenic effect of oligofructose and inulin have been confirmed both in vitro and in vivo.

In fact the marked increase in bifid bacteria and the resulting deep modification of faecal flora have been proved in vivo both on rats and volunteers fed with 3x5 g oligofructose. An increase in weight of the dry faeces observed in rats fed with oligofructose is a factor connected to the increased number of bacteria resulting from its fermentation.

Several calculations shows that about 40% carbon ingested as oligofructose is incorporated in the proliferation of the new bacteria.

The bifid bacteria act as immunomodulators and produce some vitamins and digestion enzymes; moreover, they reduce the number of potentially pathogenic anaerobes. Therefore, they are beneficial to the host but the right role of enteral microflora relative to the welfare state still remains an open question.

The stoichiometric ratio measured both in vitro and in vivo is: one fructose molecule of oligofructose produces 1 mole SCFA (0.9 moles acetate, 0.12 moles propionate and 0.06 moles butyrate) and 0.3 moles L. lactate.

In terms of C atoms the total balance is: 40% SCFA, 15% lactate, 5% CO₂ and more than 40% bacterial mass.

Besides the actions mentioned above, the importance of SCFA is their re-absorption in blood of vena portae through blind-colic epithelium, thus carrying out systemic effects. Butyrate is metabolized by colonocytes and forms the best energy substrate thereof.

Propionate and lactate are fully metabolized in liver to serve as metabolic substrates. Propionate is transformed in methylmalonil SCoA and then succinil SCoA. The lactate is a precursor for gluconeogenesis.

The acetate is only partially metabolized in liver to serve like butyrate as lipogenous substrate. The residual fraction is metabolized in the peripheral tissues, essentially the muscular tissues. The main systemic effect of oligofructosaccharides acts on lipid metabolism. Several studies report a decrease in the triglycerides and cholesterol (due essentially to a decrease in the VLDL ration).

Finally, the addition of oligofructose or inulin to the diet produces the following advantages:
1) decreasing the triglycerides
2) improving HDL/LDL ratio
3) showing a good laxative action and reducing functional constipation
4) improving the enteral flora and producing antibacterial substances
5) increasing the faecal excretion of N leading to a reduced urea excretion and to a decreased uraemia
6) increasing the absorption of minerals (in particular Ca, Mg, Fe and Na) unlike diet fibres and galactooligosaccharides.

### RESISTANT STARCH

Starch is a glucose polymer whose molecules are oriented to the same direction or, as reported by many authors, the molecules are joined by alfa bonds; such conditions allows some human enzymes to dissociate starch into glucose to supply the organism with energy. Starch is contained in cereals, vegetables (especially potatoes), pulses, hazelnuts... For many years all of the starch ingested together with foods was believed to be fully digested by man in the small intestine. Recently (1982) it was ascertained that a significant portion of starch passes to large intestine where it is fermented by colon microflora in the same way as non-starchy polysaccharides. This fraction was called "resistant starch" and its presence explains the so-called "carbohydrate gap" as well as other anomalies such as the relation between diet and risk of cancer of colon. Many reasons can cause the formation of resistant starch (mastication, more or less refined foods, type of starch association with fibres, temperature of the process used in cooking, a.s.o.).

Therefore, the amount and the features of the resistant starch in several foods do not depend only on the type of starch but also on the features of the process by which it is obtained (temperature, storage time..) and the presence of other components (lipids, sugars, fibres..).

Also the energy content of the resistant starch is particularly interesting. While resistant starch is not absorbed in the small intestine, a portion of its energy is available to the organism by the absorption of starch fermentation products. A portion of such energy is used for the proliferation of beneficial bacteria in colon. Studies on animals show that the energy content of the resistant starch is about 2 kcal per g compared with 4 kcal per g of the digestible starch.

Resistant starch provides a good production of SCFA by fermentation, with a clear prevalence of butyrate; the use in patients with MICI rises from a number of experimental observations regarding the trophic effect of SCFA to the colon (but also small intestine) mucosa. Such trophic effect would be performed both by direct action to metabolism and growth of epithelium and indirect mechanisms mediated by SNA and the gastrointestinal enterotrophic hormones such as gastrin and peptide YY (1). SCFA and particularly butyrate contribute to keep the intestinal barrier both by their trophic effect to the epithelium and other mechanisms. Butyrate was reported to stimulate the production and the secretion of mucins and the activity of carbon anhydrase of colonocytes. Butyrate acts also on other cellular elements of mucosa besides colonocytes. It represents on one side an important energy substrate also for the lymphocytes of the colic mucosa and on the other side it seems that it modulates the production of prostaglandins and thromboxanes as well as the chemotaxis of the polymorphonuclear cells. It seems that propionate improves the muscular activity of colon, which involves favourable implications in the constipation and the diverticular disease. SCFA could further prevent or reduce the ischemic damage of the enteral mucosa. They have a specific action on the mucosa (metabolism, proliferation, enzymatic activities, and ionic exchanges of colonocytes) as well as on the systemic metabolic activity; in addition, they stimulate the production of mucin and the reconstitution of enteral epithelium, this being of great importance in the protection of mucosa and partially explaining the therapeutic action in the ulcerative colitis.

Additionally they, especially butyrate, play a particularly relevant role in the metabolism of the colon cells because they are an energy source used even preferably over glucose incoming via blood. After its oxidation butyrate intervenes in the cell metabolism and produces acetyl-CoA, a central compound in the energy supply of the colonocyte. Furthermore, fat acids play a role in keeping hydroelectrolytic intraluminal homeostasis, thus promoting water and electrolyte absorption. Short-chain fat acids also reduce diarrhoea, increase the production and the secretion of mucus, and increase the hematic flow ad oxygenation. Short-chain fat acids not only give an energy contribution to the ulcerative colitis but also help the reparative processes. The activation of proteins causes a cascade of intracellular actions determining the control of the stimulation of the cell proliferation. Furthermore, butyrate helps the formation of a protein substrate by the tissue transglutaminase and the modulation of the cell proliferation in the matrix, which is extremely important in plerosis. In fact one of the first parameters for the detection of the topical treatment with fat acids is bleeding which is inclined to an improvement. The use of such substances, however, is not an alternative to conventional therapy because short-chain fat acids have an antinflammatory effect which is negligible in vivo. The association can be advantageous as it improves trophism of mucosa and helps the plerosis processes. Butyrate stabilizes the genetic patrimony of the cell in vitro, inhibits deacetylation of histones, reduces hypomethylation of DNA, modulates genic expression, and tends to help the differentiation in the neoblastic cells. A recent work has pointed out how the topical use of butyrate can normalize again the expansion of the proliferative compartment of the colon gland crypts which is present in patients suffering from ulcerative colitis and is considered as a marker of neoblastic risk. There is then a preliminary evidence that a protracted therapy with butyrate can also reduce the risk of neoplasia in the ulcerative colitis.

Furthermore, SCFA inhibit the growth and the adhesion of gram-negative aerobic bacteria. In particular, butyrate induces the integrated DNA expression and stimulates the antiviral effects of interferon.

### GLUTAMINE

Glutamine is an aminoacid which is normally considered as not essential, i.e. it is synthetized, if necessary. It is synthetized from glutamic acid by insertion of an amino group by glutamine synthetase. About 60% of all free amino acids consists of glutamine, and muscles are the main storage thereof. Cells of lung and brain are normal producers of glutamine, cells of intestine, kidney, and immunosystem are instead regular users.

Glutamine is the main energy substrate of epithelium and enteral immunocells. Glutamine causes the mass and the cellularity of small intestine (partially also colon) to increase, bacterial colonization, translocation and bacteremia as well as the stay in hospital and mortality to be reduced. Several experimental models have further documented that the administering of glutamine protects enteral mucosa from several types of injuries. The therapeutic effectiveness of glutamine in patients suffering from enteral inflammatory diseases has been proved too.

Enterocytes use glutamine as main energy substrate by its conversion into ammonium and alanine. In the oxidation processes of enterocytes, glutamine (or aspartate) determines over 70% of the production of CO₂, thus demonstrating to be the preferable energy substrate of such cells.

Glutamine also represents an essential substrate for the synthesis of glutathione, an important endogenous antioxidant particularly useful to avoid the oxidative damages produced in MICI by oxygen reactive species.

The epithelium uses glutamine (and glucose) not only as energy substrate but also as substrate for the synthesis of purine ad pyrimidine. Also in lymphocytes the glutamine supplies not only energy but also metabolic mediators for biosynthetic processes (immunoglobulins, limphokines) which are necessary to give their immune response.

As glutamine is used by mucosa, it takes part in the regulation of the function of immunocells and it is then possible that the reduction in the glutamine levels arising in several stress situations can be partly responsible for the suboptimal immune response which is associated to such situations: it is also used in radiotherapeutic treatments of oncology patients where a lower incidence of clinic infections and shorter stays in hospital compared with the controls have been noted.

Studies on rats suggest that diet integrations of glutamine can provide both therapeutic and alimentary benefits to oncology patients and protect the tissues from damages and possibly increase the sensibility of the cancer cells to chemotherapeutic treatment.

Furthermore, some authors have noticed that the diet integration with glutamine preserves hepatic glutathione, protects liver and improves the survival during the toxic state due to acetaminophenol, improves also the nitrogen balance and reduces the muscular proteic catabolism. There are evidences that the intracellular concentration of glutamine regulates the proteic metabolism so that the administration of glutamine would reduce the scission of skeletal proteins through the restoration of a normal concentration of glutamine inside the muscular cells. Glutamine is used like other aminoacids by brain and the central nervous system to elaborate the neurotransmitters that are biochemical mediators stimulating or reducing the electrical brain pulses which turn into thoughts, sensations and emotions. It seems that several neurotransmitters can also influence the perception of energy or fatigue and can be metabolized or used as normal parts of the organism functions. A strong mental or bodily stress can cause a greater metabolization of neurotransmitters so that, if their impoverishment is caused by a strong concentration requiring a strong exercize, it is essential to have a complete supply of such biochemical mediators to keep the brain running to the maximum. As a result, an alimentary contribution of glutamine can avoid or reduce a mental fatigue and generally it can be stated that glutamine levels under the normal physiological values can lead to an increased susceptibility to infections.

As it has been noticed that glutamine is a precursor of GABA, this could explain its antidepression property even if it should be remembered that the high complexity of the metabolism of such substance is still unknown. It also has properties of stimulation of the growth hormone and is a precursor of the acetylglucosamine.

It is evident from the foregoing the importance of the association of inulin, glutamine and resistant starch which is the object of this invention. To this end Applicant experimented and noticed that optimum results are obtained by the administration of an association of the components mentioned above having generally the following composition in proportions by weight:

| | |
|---|---|
| Inulin | 5% - 50% |
| Resistant starch | 5% - 50% |
| Glutamine | 5% - 50% |

a composition formed of the following proportions by weight of its components being presently considered as optimal:

| | |
|---|---|
| Inulin | 38.5% |
| Resistant starch | 23.0% |
| Glutamine | 38.5% |

It is self-evident from the foregoing that the association according to the present invention can also include a minimum percentage of one of its components which could also be missed, if necessary, in case of subjective needs.

## Claims

1. An association of prebiotics and colonic foods intended to help and keep the physiological health and the functional capacity of the intestine consisting of the following components in proportions by weight included in the ranges indicated:
| | |
|---|---|
| Inulin | 5% - 50% |
| Resistant starch | 5% - 50% |
| Glutamine | 5% - 50% |

2. The association of prebiotics and colonic foods according to claim 1, wherein the indicated components contribute with the following proportions by weight:
| | |
|---|---|
| Inulin | 38.5% |
| Resistant starch | 23.0% |
| Glutamine | 38.5% |

3. The association of prebiotics and colonic foods according to claim 1, wherein one of the components can be present in a minimum proportion or be missed in case of subjective needs.
